(19) Europäisches Patentamt / European Patent Office / Office européen des brevets

(11) **EP 4 492 711 A1**

(12) **EUROPEAN PATENT APPLICATION**
published in accordance with Art. 153(4) EPC

(43) Date of publication:
**15.01.2025 Bulletin 2025/03**

(21) Application number: **23787482.1**

(22) Date of filing: **21.03.2023**

(51) International Patent Classification (IPC):
**H04J 3/06** (2006.01)

(52) Cooperative Patent Classification (CPC):
**H04J 3/06; H04L 43/0852; H04L 43/0864**

(86) International application number:
**PCT/CN2023/082658**

(87) International publication number:
**WO 2023/197835 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.04.2022 CN 202210377287**

(71) Applicant: **Huawei Technologies Co., Ltd.
Shenzhen, Guangdong 518129 (CN)**

(72) Inventors:
• **XU, Yanwei**
  **Shenzhen, Guangdong 518129 (CN)**
• **ZHANG, Wei**
  **Shenzhen, Guangdong 518129 (CN)**
• **LI, Yuqing**
  **Shenzhen, Guangdong 518129 (CN)**
• **MING, Zhenyu**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **CLOCK SYNCHRONIZATION METHOD AND RELATED DEVICE**

(57) Embodiments of this application provide a clock synchronization method and a related device. The method includes: determining delay information and a measurement clock offset of an $n^{th}$ link in N links between at least two to-be-synchronized hosts, where n = 1, ..., N, and N is a positive integer greater than or equal to 1; determining a weight of the $n^{th}$ link based on the delay information of the $n^{th}$ link; and synchronizing clock time of the at least two to-be-synchronized hosts based on weights and measurement clock offsets of the N links. Because all the links have generally not completely the same delay information, and also have not completely the same determined weights. In the method, the clock time of the at least two to-be-synchronized hosts may be synchronized based on a weight and a measurement clock offset of each of the N links, so that errors are allocated to each link by using different weights. This improves precision of clock synchronization of a plurality of to-be-synchronized hosts, and reduces an error of the clock synchronization.

FIG. 2

## Description

This application claims priority to Chinese Patent Application No. 202210377287.4, filed with the China National Intellectual Property Administration on April 12, 2022 and entitled "CLOCK SYNCHRONIZATION METHOD AND RELATED DEVICE", which is incorporated herein by reference in its entirety.

## TECHNICAL FIELD

Embodiments of this application relate to the computer field, and mainly to a clock synchronization method, a computing apparatus, a computing device, a chip system, and a computer-readable storage medium.

## BACKGROUND

With the development of high-performance computing technologies and services, more computing services need to be implemented by using a plurality of hosts. In this process, clocks of the plurality of hosts need to be synchronized to ensure functions such as data sharing and device coordination between the hosts. Clock synchronization of the plurality of hosts is based on precise synchronization of clocks of every two hosts. Currently, a mainstream clock synchronization method is a method for sending a detection packet with a timestamp, for example, a network time protocol (network time protocol, NTP), a precision time protocol (precision time protocol, PTP), and a data center time protocol (data center time protocol, DTP). In the detection packet method, it needs to be assumed that one-way delays of round trips between two hosts are the same. However, in a network including a plurality of hosts, one-way delays of round trips between every two hosts are asymmetric. The one-way delay is time required for transmitting a data packet from a first host to a second host. Asymmetry of the one-way delays of the round trips is that the time required for transmitting the data packet from the first host to the second host is different from time required for transmitting a data packet from the second host to the first host. Therefore, in a scenario in which the one-way delays of the round trips are asymmetric, precision of clock synchronization performed by using only the packet detection method is low, and an error is large.

How to improve precision of the clock synchronization of the plurality of hosts to reduce an error of the clock synchronization becomes an urgent problem to be resolved.

## SUMMARY

Embodiments of this application provide a clock synchronization method, a computing apparatus, a computing device, a chip system, and a computer-readable storage medium, to improve precision of clock synchronization of a plurality of hosts, so as to reduce an error of the clock synchronization.

According to a first aspect, a clock synchronization method is provided. The method includes: determining delay information and a measurement clock offset of an $n^{th}$ link in N links between at least two to-be-synchronized hosts; determining a weight of the $n^{th}$ link based on the delay information of the $n^{th}$ link; and synchronizing clock time of the at least two to-be-synchronized hosts based on weights and measurement clock offsets of the N links.

Herein, n = 1, ..., N, and N is a positive integer greater than or equal to 1. The delay information includes round-trip time or a difference between one-way delays of round trips. The measurement clock offset of the $n^{th}$ link is measurement clock offsets of two to-be-synchronized hosts connected to the $n^{th}$ link.

In this embodiment of this application, a computing device may determine a weight of each link based on delay information of each link. Because all the links have generally not completely the same delay information, and also have not completely the same determined weights. The computing device may synchronize the clock time of the at least two to-be-synchronized hosts based on the weight of each of the N links and the measurement clock offset, so that errors are allocated to each link by using different weights. This improves precision of clock synchronization of a plurality of to-be-synchronized hosts, and reduces an error of the clock synchronization.

With reference to the first aspect, in some implementations of the first aspect, the weight of the $n^{th}$ link is inversely proportional to the delay information of the $n^{th}$ link.

In this embodiment of this application, the computing device may allocate a small weight to a link with large delay information, to allocate a large correction to the link with large delay information, and reduce an error of the clock synchronization.

With reference to the first aspect, in some implementations of the first aspect, loop errors of M linear independent loops are determined; a correction of each of the N links is determined based on the loop errors of the M linear independent loops and the weights of the N links; and the clock time of the at least two to-be-synchronized hosts is synchronized based on the correction and a measurement clock offset of each of the N links .

A loop error of an $m^{th}$ linear independent loop in the M linear independent loops is a sum of measurement clock offsets of all links included in the $m^{th}$ linear independent loop, m = 1, ..., M, and M < N. The correction of each of the N links meets a constraint condition.

In this embodiment of this application, the computing device may allocate the errors to each link based on the loop errors of the M linear independent loops and the weights of the N links, so as to determine the correction of each link. The computing device may alternatively synchronize the clock time of the at least two to-be-synchronized hosts based on the correction and the measurement clock offset of each link, to improve precision of clock synchronization of a plurality of to-be-synchronized hosts, and reduce an error of the clock synchronization.

With reference to the first aspect, in some implementations of the first aspect, the constraint condition includes: A sum of corrections of all the links included in the $m^{th}$ linear independent loop is the same as the loop error of the $m^{th}$ linear independent loop. The correction of each of the N links is a correction that makes a value of $W^T \Delta^2$ be a minimum value, where $W^T = \{w_1, ..., w_N\}$, $w_N$ is a weight of an $N^{th}$ link, $\Delta = \{\Delta_1, ..., \Delta_N\}^T$, and $\Delta_N$ is a correction of the $N^{th}$ link.

In this embodiment of this application, the computing device may allocate a correction to each link based on the weight of each link, so that a correction of each link in a linear independent loop is offset with a loop error of the linear independent loop, to reduce an error of the clock synchronization.

With reference to the first aspect, in some implementations of the first aspect, the constraint condition further includes: An absolute value of the correction of the $n^{th}$ link is less than the round-trip time of the $n^{th}$ link.

In this embodiment of this application, the computing device may limit a value range of the correction of the $n^{th}$ link based on a value relationship between the correction of the $n^{th}$ link and the round-trip time of the $n^{th}$ link, to determine the correction of each link, and reduce computing resources.

With reference to the first aspect, in some implementations of the first aspect, one of the at least two to-be-synchronized hosts is determined as a reference host; an actual clock offset of a $k^{th}$ shortest path is determined; and clock time of a $k^{th}$ to-be-synchronized host is adjusted to a difference between the clock time of the $k^{th}$ to-be-synchronized host and the actual clock offset of the $k^{th}$ shortest path.

The $k^{th}$ shortest path is a shortest path between the $k^{th}$ to-be-synchronized host in the K to-be-synchronized hosts and the reference host, the K to-be-synchronized hosts are hosts other than the reference host in the at least two to-be-synchronized hosts, and k = 1, ..., K. The actual clock offset of the $k^{th}$ shortest path is a sum of actual clock offsets of all links included in the shortest path between the $k^{th}$ to-be-synchronized host and the reference host. An actual clock offset of each link included in the $k^{th}$ shortest path is a difference between a measurement clock offset and a correction of each link.

In this embodiment of this application, the computing device may determine the actual clock offset of each link based on the correction and the measurement clock offset of each link, and may further determine the reference host and an actual clock offset of a shortest path between each to-be-synchronized host and the reference host. The computing device may further synchronize clock time between each to-be-synchronized host and the reference host based on the actual clock offset of the shortest path between the to-be-synchronized host and the reference host, to improve precision of clock synchronization of a plurality of to-be-synchronized hosts and reduce an error of the clock synchronization.

According to a second aspect, an embodiment of this application provides a computing device. The computing device includes units configured to implement any one of the first aspect or the possible implementations of the first aspect.

According to a third aspect, an embodiment of this application provides a computing device. The computing device includes a processor, and the processor is configured to be coupled to a memory, and read and execute instructions and/or program code in the memory, to perform any one of the first aspect or the possible implementations of the first aspect.

According to a fourth aspect, an embodiment of this application provides a chip system. The chip system includes a logic circuit, and the logic circuit is configured to be coupled to an input/output interface, and transmit data through the input/output interface, to perform any one of the first aspect or the possible implementations of the first aspect.

According to a fifth aspect, an embodiment of this application provides a computer-readable storage medium. The computer-readable storage medium stores program code. When the computer storage medium is run on a computer, the computer is enabled to perform any one of the first aspect or the possible implementations of the first aspect.

According to a sixth aspect, an embodiment of this application provides a computer program product. The computer program product includes computer program code, and when the computer program code is run on a computer, the computer is enabled to perform any one of the first aspect or the possible implementations of the first aspect.

**BRIEF DESCRIPTION OF DRAWINGS**

FIG. 1 is a schematic diagram of a system architecture of a clock synchronization system according to an embodiment of this application;

FIG. 2 is a schematic flowchart of a clock synchronization method according to an embodiment of this application;

FIG. 3 is a schematic flowchart of performing clock synchronization based on weights and measurement clock offsets of N links according to an embodiment of this application;

FIG. 4 is a schematic diagram of measurement clock offsets of three links according to an embodiment of this application;

FIG. 5 is a schematic diagram of a structure of a computing apparatus according to an embodiment of this application; and

FIG. 6 is a schematic diagram of a structure of a computing device according to an embodiment of this application.

## DESCRIPTION OF EMBODIMENTS

The following describes technical solutions of embodiments in this application with reference to accompanying drawings.

The technical solutions in embodiments of this application may be applied to a network including at least two hosts, for example, a local area network, a metropolitan area network, or a wide area network. Alternatively, the technical solutions in embodiments of this application may be applied to a cluster network including at least two hosts. This is not limited in embodiments of this application.

The host in embodiments of this application includes a machine device having a computing capability, for example, a personal computer, a notebook computer, a desktop computer, a smartphone, a server, or an intelligent chip. Alternatively, the host in embodiments of this application may include a router, a switch, or the like. This is not limited in embodiments of this application.

For ease of understanding of embodiments of this application, several terms in this application are first briefly described.

### 1. One-way delay

In network communication, the one-way delay is time required for transmitting a data packet from a first host to a second host. A communication link exists between the first host and the second host.

### 2. Round-trip time (round-trip time, RTT)

In network communication, the round-trip time is a sum of time for transmitting a data packet from a first host to a second host and time for transmitting a data packet from the second host to the first host. When one-way delays are symmetric, the round-trip time is twice the one-way delay. The symmetry of the one-way delays means that the time for transmitting the data packet from the first host to the second host is the same as the time for transmitting the data packet from the second host to the first host. When the one-way delays are asymmetric, the round-trip time is not twice the one-way delay. The asymmetry of the one-way delays means that the time for transmitting the data packet from the first host to the second host is different from the time for transmitting the data packet from the second host to the first host.

### 3. Clock offset

The clock offset is a relative difference between time of two clocks, namely, a difference between time of the two clocks at a same moment. For example, at the same moment, time of a first clock and time of a second clock are 12:00 and 12:01 respectively. In this case, a clock offset of the first clock relative to the second clock is -1 second, and an offset of the second clock relative to the first clock is 1 second.

### 4. Cluster network

A cluster means that same software is run on a group of computer devices and is virtualized into a host system to provide services for a client and an application. The cluster network is a communication system used to connect computer devices and storage resources that are independent of each other and interconnected through a highspeed network.

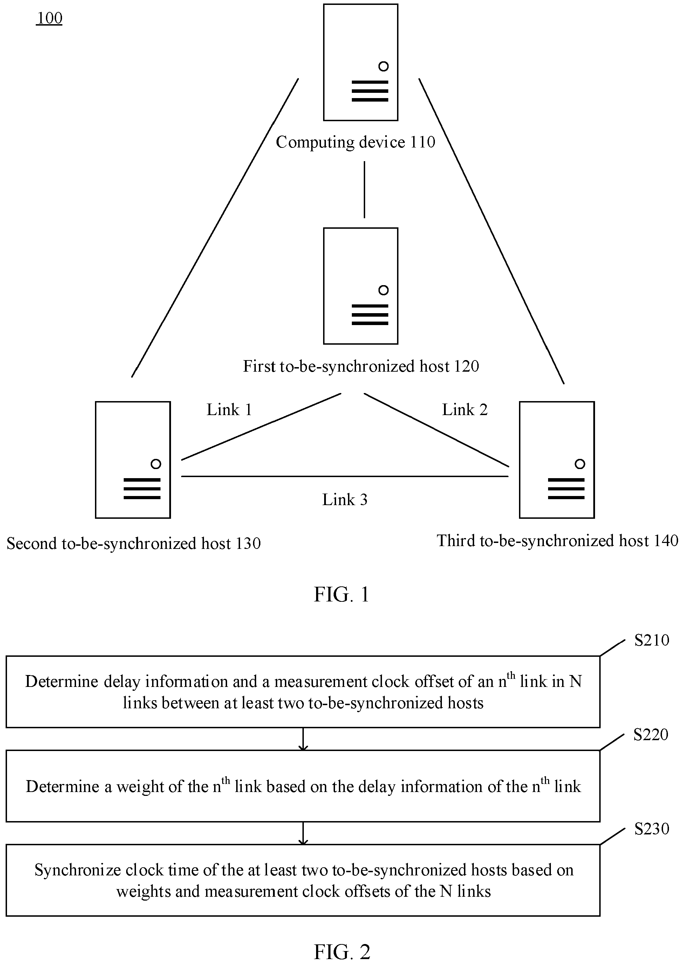

FIG. 1 is a schematic diagram of a system architecture of a clock synchronization system 100. The clock synchronization system is a system including computing devices that need to perform clock synchronization. The clock synchronization system may include all hosts in a cluster network or a computer network. For example, the clock synchronization system 100 in FIG. 1 includes a computing device 110, a first to-be-synchronized host 120, a second to-be-synchronized host 130, and a third to-be-synchronized host 140.

Alternatively, the clock synchronization system may include some hosts in a cluster network or a computer network. For example, the clock synchronization system 100 may include only a first to-be-synchronized host 120, a second to-be-synchronized host 130, and a third to-be-synchronized host 140. In this case, any one of the first to-be-synchronized host 120, the second to-be-synchronized host 130, or the third to-be-synchronized host 140 may perform steps or methods performed by the computing device 110.

FIG. 2 is a schematic flowchart of a clock synchronization method. The clock synchronization method in FIG. 2 may be performed by the clock synchronization system 100 in FIG. 1. The method in FIG. 2 includes the following steps.

S210: Determine delay information and a measurement clock offset of an $n^{th}$ link in N links between at least two to-be-synchronized hosts.

A computing device may determine the delay information and the measurement clock offset of the $n^{th}$ link in the N links between the at least two to-be-synchronized hosts. The delay information of the $n^{th}$ link includes round-trip time of the $n^{th}$ link or a difference between one-way delays of round trips. The measurement clock offset of the $n^{th}$ link is measured measurement clock offsets of two to-be-synchronized hosts connected to the $n^{th}$ link, where n = 1, ..., N, and N is a positive integer greater than or equal to 1.

Optionally, the computing device may obtain delay information and measurement clock offsets of the N links between the at least two to-be-synchronized hosts through another device connected to the computing device. Alternatively, a first to-be-synchronized host and a second to-be-synchronized host in the at least two to-be-synchronized hosts may send a detection packet or a data packet to each other. The computing device may determine, based on time recorded in the detection packet or the data packet, delay information and a measurement clock offset of a link between the first to-be-synchronized host and the second to-be-synchronized host. The first to-be-synchronized host and the second to-be-synchronized host are any two different to-be-synchronized hosts in the at least two to-be-synchronized hosts.

The clock synchronization system 100 shown in FIG. 1 is used as an example. A computer device 110 may determine delay information and a clock offset of each of three links. For example, the computing device 110 may determine delay information and a measurement clock offset of each of three links (a link 1, a link 2, and a link 3 shown in FIG. 1) between the first to-be-synchronized host 120, the second to-be-synchronized host 130, and the third to-be-synchronized host 140. The link 1 is used as an example, and delay information of the link 1 includes round-trip time of the link 1 or a difference between one-way delays of round trips.

It is assumed that time at which the first to-be-synchronized host 120 sends a detection packet 1 to the second to-be-synchronized host 130 is t1, and time at which the second to-be-synchronized host 130 receives the detection packet 1 is t2; and time at which the second to-be-synchronized host 130 sends a detection packet 2 to the first to-be-synchronized host 120 is t3, and time at which the first to-be-synchronized host 120 receives the detection packet 2 is t4. The detection packet 1 may record the time t1 and t2, and the detection packet 2 may record the time t3 and t4. The second to-be-synchronized host 130 may send, to the computing device 110, the time t1 and t2 recorded in the detection packet 1, so that the computing device 110 obtains a one-way delay 1 of the link 1, where the one-way delay 1 = t2 - t1. The first to-be-synchronized host 120 may send, to the computing device 110, the time t3 and t4 recorded in the detection packet 2, so that the computing device 110 obtains a one-way delay 2 of the link 1, where the one-way delay 2 = t4 - t3. The round-trip time of the link 1 is a sum of the one-way delay 1 and the one-way delay 2. In other words, the round-trip time of the link 1 = t1 + t2 + t3 + t4. The difference between the one-way delays of the round trips of the link 1 is a difference between the one-way delay 1 and the one-way delay 2. In other words, the difference between the one-way delays of round trips of the link 1 = (t2 - t1) - (t4 - t3).

Optionally, the detection packet 1 and the detection packet 2 may be a same detection packet 3. In other words, the detection packet 3 may record the time t1, t2, t3, and t4.

When the detection packet 1 and the detection packet 2 are different detection packets, the computing device 110 may determine the measurement clock offset between the first to-be-synchronized host 120 and the second to-be-synchronized host 130 based on the time recorded in the detection packet 1 and the detection packet 2. Alternatively, when the detection packet 2 and the detection packet 1 are the same detection packet 3, the computing device 110 may determine the measurement clock offset between the first to-be-synchronized host 120 and the second to-be-synchronized host 130 based on the time recorded in the detection packet 3.

For example, it is assumed that at a same moment, clock time of the first to-be-synchronized host 120 is 12:00, and a clock offset of the second to-be-synchronized host 130 relative to the first to-be-synchronized host 120 is X. In this case, clock time of the second to-be-synchronized host 130 is 12:00 + X . It may be determined, based on the time recorded in the detection packet 1 and the detection packet 2, that t1 + d1 = t2 - X, and t3 - X + d2 = t4. Herein, d1 is time required for sending the detection packet 1 from the first to-be-synchronized host 120 to the second to-be-synchronized host 130 through the link 1, and d2 is time required for sending the detection packet 2 from the second to-be-synchronized host 130 to the first to-be-synchronized host 120 through the link 1. X=((t2-t1)+(t3-t4) +d2-d1)/2 may be determined according to the foregoing formula. When the one-way delays of the round-trip are symmetric, that is, d1 = d2, X=((t2-t1)+(t3-t4))/2

S220: Determine a weight of the $n^{th}$ link based on the delay information of the $n^{th}$ link.

Because the delay information of each of the N links is not completely the same, the weight of the $n^{th}$ link may be determined based on the delay information of the $n^{th}$ link, so that errors may be allocated based on the weight of each link, to improve precision of clock synchronization of the at least two to-be-synchronized hosts.

The computing device may determine the weight of the $n^{th}$ link based on the delay information of the $n^{th}$ link in the N links. The weight of the $n^{th}$ link is inversely proportional to the delay information of the $n^{th}$ link. Because all the links have generally not completely the same delay information, and also have not completely the same weights.

The clock synchronization system 100 shown in FIG. 1 is used as an example. The computing device 110 may determine a weight of the link 1 based on the delay information of the link 1 obtained in step S210. The weight of the link 1 is inversely proportional to the delay information of the link 1.

Optionally, the computing device may determine the weight of the $n^{th}$ link based on the round-trip time of the $n^{th}$ link, where the weight of the $n^{th}$ link is inversely proportional to the round-trip time of the $n^{th}$ link. Alternatively, the computing device may determine the weight of the $n^{th}$ link based on the difference between the one-way delays of the round trips of the $n^{th}$ link, where the weight of the $n^{th}$ link is inversely proportional to the difference between the one-way delays of the round trips of the $n^{th}$ link. Alternatively, the computing device may determine the weight of the $n^{th}$ link based on the round-trip time of the $n^{th}$ link and the difference between the one-way delays of the round trips, where the weight of the $n^{th}$

link is inversely proportional to the round-trip time of the $n^{th}$ link and the difference between the one-way delays of the round trips.

For example, the weight of the $n^{th}$ link may be a reciprocal of the round-trip time of the $n^{th}$ link. Alternatively, the weight of the $n^{th}$ link may be a reciprocal of the difference between the one-way delays of the round trips of the $n^{th}$ link. Alternatively, the weight of the $n^{th}$ link may be a reciprocal of a sum of the round-trip time of the $n^{th}$ link and the difference between the one-way delays of the round trips.

For example, it is assumed that the round-trip time of the $n^{th}$ link is 50 ms. In this case, the weight of the $n^{th}$ link may be 1/50. Alternatively, the weight of the $n^{th}$ link may be a/(50), where a is a preset parameter.

For example, it is assumed that the difference between the one-way delays of the round trips of the $n^{th}$ link is 10 ms. In this case, the weight of the $n^{th}$ link may be 1/10. Alternatively, the weight of the $n^{th}$ link may be b/(10), where b is a preset parameter.

For example, it is assumed that the round-trip time of the $n^{th}$ link is 50 ms, and the difference between the one-way delays of the round trips of the $n^{th}$ link is 10 ms. In this case, the weight of the $n^{th}$ link may be 1/(50 + 10). Alternatively, the weight of the $n^{th}$ link may be c/(50 + 10), where c is a preset parameter.

S230: Synchronize clock time of the at least two to-be-synchronized hosts based on weights and measurement clock offsets of the N links.

The computing device may synchronize all or some of the at least two to-be-synchronized hosts based on the weights and the measurement clock offsets of the N links.

Optionally, the computing device may determine M linear independent loops based on the N links. The linear independent loop is a loop that cannot be split into other loops. In other words , one linear independent loop cannot include another loop or a plurality of loops. An $m^{th}$ linear independent loop in the M linear independent loops includes at least three links in the N links, where m = 1, ..., M, and M < N. All links included in the $m^{th}$ linear independent loop form a loop, and the loop does not include another loop.

The clock synchronization system 100 shown in FIG. 1 is used as an example. The computing device 110 may determine a linear independent loop based on the link 1, the link 2, and the link 3. The linear independent loop includes the link 1, the link 2, and the link 3, and the linear independent loop cannot be split into other loops.

For another example, it is assumed that the computing device 110 is a fourth to-be-synchronized host, a link between the fourth to-be-synchronized host and the second to-be-synchronized host 130 is a link 4, a link between the fourth to-be-synchronized host and the first to-be-synchronized host 120 is a link 5, and a link between the fourth to-be-synchronized host and the third to-be-synchronized host 140 is a link 6. In this case, three linear independent loops may be determined based on the six links (namely, the link 1 to the link 6). A linear independent loop 1 includes the link 1, the link 2, and the link 3; a linear independent loop 2 includes the link 1, the link 4, and the link 5; and a linear independent loop 3 includes the link 2, the link 5, and the link 6.

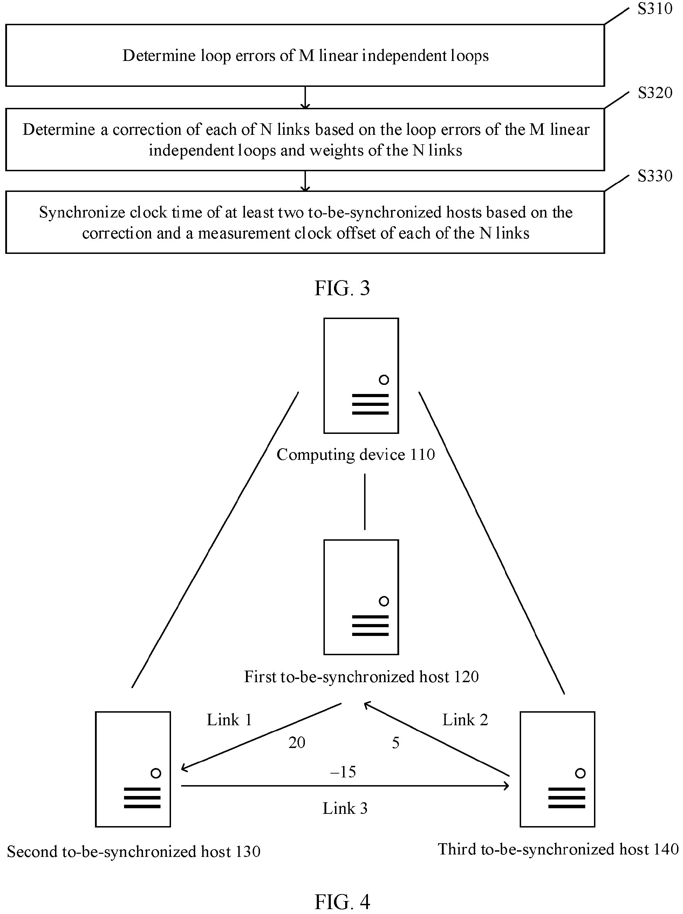

Optionally, the computing device may determine loop errors of the M linear independent loops based on the determined M linear independent loops. A loop error of the $m^{th}$ linear independent loop in the M linear independent loops is a sum of measurement clock offsets of all the links included in the $m^{th}$ linear independent loop. The computing device may further determine a correction of each of the N links based on the loop errors of the M linear independent loops and the weights of the N links, where the correction of each of the N links meets a constraint condition. The computing device may further synchronize the clock time of the at least two to-be-synchronized hosts based on the correction and the measurement clock offset of each of the N links. For a specific implementation, refer to the descriptions in FIG. 3.

Optionally, the constraint condition that the correction of each of the N links meets includes: A sum of corrections of all the links included in the $m^{th}$ linear independent loop is the same as the loop error of the $m^{th}$ linear independent loop. The correction of each of the N links is a correction that makes a value of $W^T \Delta^2$ be a minimum value, where $W^T = \{w_1, ..., w_N\}$, $w_N$ is a weight of an $N^{th}$ link, $\Delta = \{\Delta_1, ..., \Delta_N\}^T$, and $\Delta_N$ is a correction of the $N^{th}$ link.

Optionally, the constraint condition that the correction of each of the N links meets further includes: An absolute value of the correction of the $n^{th}$ link is less than the round-trip time of the $n^{th}$ link.

When synchronizing the clock time of the at least two to-be-synchronized hosts, the computing device may determine one of the at least two to-be-synchronized hosts as a reference host. The computing device may further determine an actual clock offset of a $k^{th}$ shortest path; and adjust clock time of a $k^{th}$ to-be-synchronized host to a difference between the clock time of the $k^{th}$ to-be-synchronized host and the actual clock offset of the $k^{th}$ shortest path. The $k^{th}$ shortest path is a shortest path between the $k^{th}$ to-be-synchronized host in the K to-be-synchronized hosts and the reference host, the K to-be-synchronized hosts are hosts other than the reference host in the at least two to-be-synchronized hosts, and k = 1, ..., K. The actual clock offset of the $k^{th}$ shortest path is a sum of actual clock offsets of all links included in the shortest path between the $k^{th}$ to-be-synchronized host and the reference host, and an actual clock offset of each link included in the $k^{th}$ shortest path is a difference between a measurement clock offset and a correction of each link.

Optionally, the shortest path between the $k^{th}$ to-be-synchronized host and the reference host is a path with a minimum quantity of links between the $k^{th}$ to-be-synchronized host and the reference host.

The clock synchronization system 100 shown in FIG. 1 is used as an example. The first to-be-synchronized host 120 is determined as the reference host. Based on the three links shown in FIG. 1, it may be determined that a shortest path between the second to-be-synchronized host 130 and the first to-be-synchronized host 120 is the link 1 that directly connects the second to-be-synchronized host 130 and the first to-be-synchronized host 120, instead of a path (namely, the link 2 + the link 3) that connects the second to-be-synchronized host 130 and the first to-be-synchronized host 120 through the third to-be-synchronized host 140.

The computing device may determine the weight of the $n^{th}$ link based on the delay information of the $n^{th}$ link in the N links. The computing device may further allocate an error to each link by using different weights based on the weight of each of the N links and the measurement clock offset, to precisely synchronize the clock time of the at least two to-be-synchronized hosts, and reduce an error of the clock synchronization.

FIG. 3 is a schematic flowchart of a method for performing clock synchronization based on weights and measurement clock offsets of N links. The method in FIG. 3 may be performed by a clock synchronization system 100 in FIG. 1. The method in FIG. 3 includes the following steps.

S310: Determine loop errors of M linear independent loops.

A computing device may determine the loop errors of the M linear independent loops, where a loop error of an $m^{th}$ linear independent loop in the M linear independent loops is a sum of measurement clock offsets of all links included in the $m^{th}$ linear independent loop, m = 1, ..., M, and M < N.

Because a clock offset of a first to-be-synchronized host relative to a second to-be-synchronized host and a clock offset of the second to-be-synchronized host relative to the first to-be-synchronized host are opposite numbers, a clock offset between the two to-be-synchronized hosts may be represented as a directed line with a weight value. The first to-be-synchronized host and the second to-be-synchronized host are any two different hosts of the at least two to-be-synchronized hosts.

The clock synchronization system 100 shown in FIG. 1 is used as an example. It is assumed that a measurement clock offset of a second to-be-synchronized host 130 relative to a first to-be-synchronized host 120 is 20 microseconds, that is, a measurement clock offset of the first to-be-synchronized host 120 relative to the second to-be-synchronized host 130 is -20 microseconds. It is assumed that a measurement clock offset of a third to-be-synchronized host 140 relative to the second to-be-synchronized host 130 is -15 microseconds, that is, a measurement clock offset of the second to-be-synchronized host 130 relative to the third to-be-synchronized host 140 is 15 microseconds. It is assumed that a measurement clock offset of the first to-be-synchronized host 120 relative to the third to-be-synchronized host 140 is 5 microseconds, that is, a measurement clock offset of the third to-be-synchronized host 140 relative to the first to-be-synchronized host 120 is -5 microseconds, measurement clock offsets of three links between the three to-be-synchronized hosts are shown in FIG. 4. In FIG. 4, an arrow on a link connecting two to-be-synchronized hosts is used to indicate a direction of a measurement clock offset between the two to-be-synchronized hosts, and a value on the link connecting the two to-be-synchronized hosts is used to indicate a value of a measurement clock offset of a to-be-synchronized host pointed by the arrow relative to a to-be-synchronized host at a tail of the arrow.

A linear independent loop may be determined based on three links between the three to-be-synchronized hosts in FIG. 4. The linear independent loop includes a link 1, a link 2, and a link 3. A loop error of the linear independent loop is a sum of measurement clock offsets of the link 1, the link 2, and the link 3, and arrows used to indicate directions of the measurement clock offsets on the link 1, the link 2, and the link 3 are connected to each other. To be specific, the loop error of the linear independent loop is a sum of the measurement clock offset of the second to-be-synchronized host 130 relative to the first to-be-synchronized host 120, the measurement clock offset of the third to-be-synchronized host 140 relative to the second to-be-synchronized host 130, and the measurement clock offset of the first to-be-synchronized host 120 relative to the third to-be-synchronized host 140, that is, the loop error of the linear independent loop is 20 - 15 + 5 = 10 microseconds.

When the loop error of the linear independent loop is 0, based on a measurement clock offset of each link included in the linear independent loop, precision of synchronizing clock time of two to-be-synchronized hosts connected to each link is high. When the loop error of the linear independent loop is not 0, based on a measurement clock offset of each link included in the linear independent loop, precision of synchronizing clock time of two to-be-synchronized hosts connected to each link is low.

For example, it is assumed that the measurement clock offset of the second to-be-synchronized host 130 relative to the first to-be-synchronized host 120 is 10 microseconds, and measurement clock offsets between other to-be-synchronized hosts are shown in FIG. 4. Assuming that clock time of the first to-be-synchronized host 120 is 12:00 at a first moment, it may be determined that clock time of the second to-be-synchronized host 130 is 12:00 + 10 microseconds at the first moment, and clock time of the third to-be-synchronized host 140 is 12:00 - 5 microseconds at the first moment. At a same moment, if the clock time of the second to-be-synchronized host 130 may be determined as 12:00 + 10 microseconds based on the clock time of the third to-be-synchronized host 140 and the measurement clock offset between the third to-be-synchronized host 140 and the second to-be-synchronized host 130, that is, the clock time is consistent with the clock time determined based on the clock time of the first to-be-synchronized host 120 and the measurement clock offset between the first to-be-synchronized host 120 and the second to-be-synchronized host 130. In other words, when the loop error of the linear independent loop is 0, the measurement clock offset of each link in the linear independent loop has no error or has a small error. Based on the measurement clock offset that is of each link and that has no error or has a small error, precision of performing clock synchronization on two to-be-synchronized hosts connected to each link is high.

For example, it is assumed that measurement clock offsets between three to-be-synchronized hosts are shown in FIG. 4. Assuming that clock time of the first to-be-synchronized host 120 is 12:00 at a first moment, it may be determined that clock time of the second to-be-synchronized host 130 is 12:00 + 20 microseconds at the first moment, and clock time of the third to-be-synchronized host 140 is 12:00 - 5 microseconds at the first moment. At a same moment, if the clock time of the second to-be-synchronized host 130 may be determined as 12:00 + 10 microseconds based on the clock time of the third to-be-synchronized host 140 and the measurement clock offset between the third to-be-synchronized host 140 and the second to-be-synchronized host 130, that is, the clock time is inconsistent with the clock time determined based on the clock time of the first to-be-synchronized host 120 and the measurement clock offset between the first to-be-synchronized host 120 and the second to-be-synchronized host 130. In other words, when the loop error of the linear independent loop is not 0, a measurement clock offset of at least one link in the linear independent loop has an error. Precision of synchronizing, based on the measurement clock offset with an error of the at least one link, clock time of two to-be-synchronized hosts connected to each of the at least one link is low.

S320: Determine a correction of each of N links based on the loop errors of the M linear independent loops and weights of the N links.

The computing device may determine the correction of each of the N links based on the loop errors of the M linear independent loops and the weights of the N links, so as to synchronize clock time of the at least two to-be-synchronized hosts based on the correction of each link.

Optionally, the correction of each link may meet the following constraint condition: A sum of corrections of all links included in the $m^{th}$ linear independent loop is the same as the loop error of the $m^{th}$ linear independent loop. The correction of each of the N links is a correction that makes a value of $W^T\Delta^2$ be a minimum value, where $W^T=\{w_1, ..., w_N\}$, $w_N$ is a weight of an $N^{th}$ link, $\Delta=\{\Delta_1, ..., \Delta_N\}^T$, and $\Delta_N$ is a correction of the $N^{th}$ link.

Alternatively, the correction of each link may meet the following constraint condition: A difference between a sum of corrections of all links included in the $m^{th}$ linear independent loop and a loop error of the $m^{th}$ linear independent loop is less than a first preset threshold. The correction of each of the N links is a correction that makes a value of $W^T\Delta^2$ be a minimum value, where $W^T=\{w_1, ..., w_N\}$, $w_N$ is a weight of an $N^{th}$ link, $\Delta=\{\Delta_1, ..., \Delta_N\}^T$, and $\Delta_N$ is a correction of the $N^{th}$ link.

Alternatively, the correction of each link may meet the following constraint condition: A sum of corrections of all links included in the $m^{th}$ linear independent loop is the same as the loop error of the $m^{th}$ linear independent loop. The correction of each of the N links is a correction that makes a value of $W^T\Delta^2$ be less than a second preset threshold, where $W^T=\{w_1, ..., w_N\}$, $w_N$ is a weight of an $N^{th}$ link, $\Delta=\{\Delta_1, ..., \Delta_N\}^T$, and $\Delta_N$ is a correction of the $N^{th}$ link.

Alternatively, the correction of each link may meet the following constraint condition: A difference between a sum of corrections of all links included in the $m^{th}$ linear independent loop and the loop error of the $m^{th}$ linear independent loop is less than a first preset threshold. The correction of each of the N links is a correction that makes a value of $W^T\Delta^2$ be less than a second preset threshold, where $W^T=\{w_1, ..., w_N\}$, $w_N$ is a weight of an $N^{th}$ link, $\Delta=\{\Delta_1, ..., \Delta_N\}^T$, and $\Delta_N$ is a correction of the $N^{th}$ link.

Optionally, the correction of each link may further meet the following constraint condition: An absolute value of the correction of the $n^{th}$ link is less than round-trip time of the $n^{th}$ link. Alternatively, the correction of each link may further meet the following constraint condition: An absolute value of the correction of the $n^{th}$ link is less than a half of round-trip time of the $n^{th}$ link.

The clock synchronization system 100 shown in FIG. 1 is used as an example. It is assumed that time at which the first to-be-synchronized host 120 sends a detection packet 1 to the second to-be-synchronized host 130 is t1, and time at which the second to-be-synchronized host 130 receives the detection packet 1 is t2. Time at which the second to-be-synchronized host 130 sends a detection packet 2 to the first to-be-synchronized host 120 is t3, and time at which the first to-be-synchronized host 120 receives the detection packet 2 is t4. Time required for sending the detection packet 1 from the first to-be-synchronized host 120 to the second to-be-synchronized host 130 through the link 1 is d1, and time required for sending the detection packet 2 from the second to-be-synchronized host 130 to the first to-be-synchronized host 120 through the link 1 is d2. In this case, it may be determined that the clock offset of the second to-be-synchronized host 130 relative to the first to-be-synchronized host 120 is X=((t2-t1)+(t3-t4)+d2-d1)/2. In an ideal case, that is, when d1 = d2, X=((t2-t1)+(t3-t4))/2. In other words, a correction of the second to-be-synchronized host 130 relative to the first to-be-synchronized host 120 is $\Delta\approx(d2-d1)/2$. Because round-trip time RRT between the first to-be-synchronized host 120 and the second to-be-synchronized host 130 is equal to d1 + d2, and because |d1-d2|<d1+d2, $|\Delta|\approx|(d2-d1)/2|<(d1+d2)/2=RTT/2$, that is, $|\Delta|<RTT$. In other words, it is obtained that -RTT<$\Delta$<RTT.

For example, it is assumed that links and measurement clock offsets between three to-be-synchronized hosts are shown in FIG. 4, and it may be determined, according to step S310, that a loop error of a linear independent loop in FIG. 4 is 10 microseconds.

Because delay information of each of the N links between the at least two to-be-synchronized hosts is not completely the same, different corrections need to be allocated to the links based on different weights.

When delay information of the $n^{th}$ link is large, that is, when the round-trip time of the $n^{th}$ link or a difference between one-way delays of round trips is large, an error of the measurement clock offset of the $n^{th}$ link is large. Because the error of the measurement clock offset of the $n^{th}$ link is large, a small weight needs to be allocated to the $n^{th}$ link, so that the correction of the $n^{th}$ link is large when the constraint condition is met.

The clock synchronization system 100 shown in FIG. 1 is used as an example. It can be learned from the foregoing that the clock offset of the second to-be-synchronized host 130 relative to the first to-be-synchronized host 120 is X=((t2-t1)+(t3-t4)+d2-d1)/2. Herein, d2 - d1 is a difference between one-way delays of round trips. In other words, if the difference between one-way delays of round trips is large, an error of a measurement clock offset of a link is large, and a link with a larger error of the measurement clock offset should be allocated with a larger correction. Because the constraint condition is that the correction of each of the N links is a correction that enables a value of $W^T\Delta^2$ to be a minimum value, if the difference between one-way delays of round trips of the link is large, a small weight should be allocated to the link, so that when the value of $W^T\Delta^2$ is the minimum value, a large correction is allocated to the link.

The clock synchronization system 100 shown in FIG. 1 is used as an example. It is assumed that a weight of a link between the first to-be-synchronized host 120 and the second to-be-synchronized host 130 may be determined as $w_1$ according to step S220, a weight of a link between the first to-be-synchronized host 120 and the third to-be-synchronized host 140 is $w_2$, and a weight of a link between the second to-be-synchronized host 130 and the third to-be-synchronized host 140 is $w_3$.

To synchronize the clock time of the three to-be-synchronized hosts shown in FIG. 1, the loop error of the linear independent loop in FIG. 1 needs to be 0. Because the loop error of the linear independent loop in FIG. 1 is not 0, the measurement clock offset of each link in the linear independent loop needs to be corrected. Because the measurement clock offset of each link is a value having a direction, the correction for correcting the measurement clock offset of each link is also a value having a direction.

Optionally, the measurement clock offset of the link between the first to-be-synchronized host 120 and the second to-be-synchronized host 130 may be the measurement clock offset of the second to-be-synchronized host 130 relative to the first to-be-synchronized host 120, or may be the measurement clock offset of the first to-be-synchronized host 120 relative to the second to-be-synchronized host 130. This is not limited in this embodiment of this application.

When the measurement clock offset of the link between the first to-be-synchronized host 120 and the second to-be-synchronized host 130 is the measurement clock offset of the second to-be-synchronized host 130 relative to the first to-be-synchronized host 120, a correction of the link between the first to-be-synchronized host 120 and the second to-be-synchronized host 130 is a correction of the measurement clock offset of the second to-be-synchronized host 130 relative to the first to-be-synchronized host 120.

When the measurement clock offset of the link between the first to-be-synchronized host 120 and the second to-be-synchronized host 130 is the measurement clock offset of the first to-be-synchronized host 120 relative to the second to-be-synchronized host 130, a correction of the link between the first to-be-synchronized host 120 and the second to-be-synchronized host 130 is a correction of the measurement clock offset of the first to-be-synchronized host 120 relative to the second to-be-synchronized host 130.

According to the measurement clock offset of each link shown in FIG. 4, it is assumed that the correction of the link between the first to-be-synchronized host 120 and the second to-be-synchronized host 130 is $\Delta_1$, that is, it is assumed that the correction of the second to-be-synchronized host 130 relative to the first to-be-synchronized host 120 is $\Delta_1$. It is assumed that a correction of the link between the first to-be-synchronized host 120 and the third to-be-synchronized host 140 is $\Delta_2$, that is, it is assumed that a correction of the first to-be-synchronized host 120 relative to the third to-be-synchronized host 140 is $\Delta_2$. It is assumed that a correction of the link between the second to-be-synchronized host 130 and the third to-be-synchronized host 140 is $\Delta_3$, that is, it is assumed that a correction of the third to-be-synchronized host 140 relative to the second to-be-synchronized host 130 is $\Delta_3$.

In order to make the loop error of the linear independent loop be 0, it is necessary to make the sum of corrections of all links in the linear independent loop the same as the loop error of the linear independent loop, so as to eliminate the loop error of the linear independent loop. That is, $\Delta_1+\Delta_2+\Delta_3=10$ needs to be met.

When the loop error of the linear independent loop is the same as the sum of the corrections of all links included in the linear independent loop, a correction that should be allocated to each link is a correction that enables a value of $W^T\Delta^2$ to be a minimum value, where $W^T=\{w_1, ..., w_N\}$, $w_N$ is a weight of an $N^{th}$ link, $\Delta=\{\Delta_1, ..., \Delta_N\}^T$, and $\Delta_N$ is a correction of the $N^{th}$ link.

3

That is, when $\Delta_1+\Delta_2+\Delta_3=10$ is met, a value of

$$\left[w_1, w_2, w_3\right]\left[\Delta_1^2, \Delta_2^2, \Delta_3^2\right]^T = \sum_{i=1}^{3} w_i \Delta_i^2$$

is obtained by adjusting a value of $\Delta_i$, where i = 1, 2, and 3. Corresponding $\Delta_i$ is used as a correction of an $i^{th}$ link when a

$$\sum_{i=1}^{3} w_i \Delta_i^2$$

value of is a minimum value.

For example, it is assumed that the value of

$$\sum_{i=1}^{3} w_i \Delta_i^2$$

is the minimum value, $\Delta_1$=6, $\Delta_2$=1, and $\Delta_3$=3. In other words, the correction of the link between the first to-be-synchronized host 120 and the second to-be-synchronized host 130 is 6 microseconds, that is, the correction of the second to-be-synchronized host 130 relative to the first to-be-synchronized host 120 is 6 microseconds. The correction of the link between the first to-be-synchronized host 120 and the third to-be-synchronized host 140 is 1 microsecond, that is, the correction of the first to-be-synchronized host 120 relative to the third to-be-synchronized host 140 is 1 microsecond. The correction of the link between the second to-be-synchronized host 130 and the third to-be-synchronized host 140 is 3 microseconds, that is, the correction of the third to-be-synchronized host 140 relative to the second to-be-synchronized host 130 is 3 microseconds.

Because the measurement clock offset of the second to-be-synchronized host 130 relative to the first to-be-synchronized host 120 is 20 microseconds, and the correction of the second to-be-synchronized host 130 relative to the first to-be-synchronized host 120 is 6 microseconds, an actual clock offset of the second to-be-synchronized host 130 relative to the first to-be-synchronized host 120 is 20 - 6 = 14 microseconds, that is, an actual clock offset of the first to-be-synchronized host 120 relative to the second to-be-synchronized host 130 is -14 microseconds. The measurement clock offset of the first to-be-synchronized host 120 relative to the third to-be-synchronized host 140 is 5 microseconds, and the correction of the first to-be-synchronized host 120 relative to the third to-be-synchronized host 140 is 1 microsecond. Therefore, the measurement clock offset of the first to-be-synchronized host 120 relative to the third to-be-synchronized host 140 is 5 - 1 = 4 microseconds, that is, an actual clock offset of the third to-be-synchronized host 140 relative to the first to-be-synchronized host 120 is -4 microseconds. The measurement clock offset of the third to-be-synchronized host 140 relative to the second to-be-synchronized host 130 is -15 microseconds, and the correction of the third to-be-synchronized host 140 relative to the second to-be-synchronized host 130 is 3 microseconds. Therefore, an actual clock offset of the third to-be-synchronized host 140 relative to the second to-be-synchronized host 130 is -15 - 3 = -18 microseconds, that is, an actual clock offset of the second to-be-synchronized host 130 relative to the third to-be-synchronized host 140 is 18 microseconds.

In other words, in FIG. 1, an actual clock offset of the link 1 is 14 microseconds, an actual clock offset of the link 2 is 4 microseconds, and an actual clock offset of the link 3 is -18 microseconds. According to the actual clock offsets of the three links, it may be determined that the loop error of the linear independent loop in FIG. 1 is 14 + 4 - 18 = 0 microseconds. Therefore, after the measurement clock offset of each link is corrected based on the correction of each link obtained in step S320, a loop error of each linear independent loop in the M linear independent loops may be 0, that is, clock synchronization may be performed on at least two to-be-synchronized hosts based on actual clock offsets of the N links, and an error of the clock synchronization is small.

S330: Synchronize the clock time of the at least two to-be-synchronized hosts based on the correction and a measurement clock offset of each of the N links.

Optionally, the computing device may determine one of the at least two to-be-synchronized hosts as a reference host. The computing device may further determine an actual clock offset of a $k^{th}$ shortest path; and adjust clock time of a $k^{th}$ to-be-synchronized host to a difference between the clock time of the $k^{th}$ to-be-synchronized host and the actual clock offset of the $k^{th}$ shortest path. The $k^{th}$ shortest path is a shortest path between the $k^{th}$ to-be-synchronized host in the K to-be-synchronized hosts and the reference host, the K to-be-synchronized hosts are hosts other than the reference host in the at least two to-be-synchronized hosts, and k = 1, ..., K.

Optionally, the actual clock offset of the $k^{th}$ shortest path is a sum of actual clock offsets of all links included in the shortest path between the $k^{th}$ to-be-synchronized host and the reference host. The actual clock offset of each link included in the $k^{th}$ shortest path is a difference between the measurement clock offset of each link and the correction.

Optionally, the shortest path between the $k^{th}$ to-be-synchronized host and the reference host is a path with a minimum quantity of links between the $k^{th}$ to-be-synchronized host and the reference host.

The clock synchronization system 100 shown in FIG. 1 is used as an example, it is assumed that the first to-be-synchronized host 120 is determined as the reference host. According to the three links shown in FIG. 1, it may be determined that a shortest path between the second to-be-synchronized host 130 and the first to-be-synchronized host 120 is the link 1, instead of a path including the link 2 and the link 3.

When the shortest path between the $k^{th}$ to-be-synchronized host and the reference host is a link that directly connects the $k^{th}$ to-be-synchronized host and the reference host, an actual clock offset of the shortest path between the $k^{th}$ to-be-synchronized host and the reference host is an actual clock offset of the $k^{th}$ to-be-synchronized host relative to the reference host. The actual clock offset of the $k^{th}$ to-be-synchronized host relative to the reference host is a difference between the measurement clock offset and the correction of the $k^{th}$ to-be-synchronized host relative to the reference host.

When the shortest path between the $k^{th}$ to-be-synchronized host and the reference host is two links connecting the $k^{th}$ to-be-synchronized host and the reference host through an $i^{th}$ to-be-synchronized host, the actual clock offset of the shortest path between the $k^{th}$ to-be-synchronized host and the reference host is a sum of an actual clock offset of the $k^{th}$ to-be-synchronized host relative to the $i^{th}$ to-be-synchronized host and an actual clock offset of the $i^{th}$ to-be-synchronized host relative to the reference host. The $i^{th}$ to-be-synchronized host is any to-be-synchronized host that is in K to-be-synchronized hosts and that is different from the $k^{th}$ to-be-synchronized host. The actual clock offset of the $k^{th}$ to-be-synchronized host relative to the $i^{th}$ to-be-synchronized host is a difference between the measurement clock offset and the correction of the $k^{th}$ to-be-synchronized host relative to the $i^{th}$ to-be-synchronized host.

Using the clock synchronization system 100 shown in FIG. 1 as an example, the correction of each link obtained according to step S320 is $\Delta_1=6$, $\Delta_2=1$, and $\Delta_3=3$. If the first to-be-synchronized host 120 is the reference host, it may be determined that the actual clock offset of the shortest path between the second to-be-synchronized host 130 and the first to-be-synchronized host 120 is a difference between the measurement clock offset and the correction of the second to-be-synchronized host 130 relative to the first to-be-synchronized host 120. That is, the actual clock offset of the second to-be-synchronized host 130 relative to the first to-be-synchronized host 120 is 20 - 6 = 14 microseconds. Similarly, it may be determined that the actual clock offset of the shortest path between the third to-be-synchronized host 140 and the first to-be-synchronized host 120 is a difference between the measurement clock offset and the correction of the third to-be-synchronized host 140 relative to the first to-be-synchronized host 120. That is, the actual clock offset of the third to-be-synchronized host 140 relative to the first to-be-synchronized host 120 is (-5) - (-1) = -4 microseconds.

Assuming that the first to-be-synchronized host 120 is the reference host, and the clock time of the first to-be-synchronized host 120 at the first moment is 12:00, it may be determined, based on the actual clock offset of the shortest path between the second to-be-synchronized host 130 and the reference host, that the clock time of the second to-be-synchronized host 130 at the first moment is 12:00 + 14 microseconds. Similarly, it can be learned that clock time of the third to-be-synchronized host 140 at the first moment is 12:00 - 4 microseconds.

In other words, the clock time of the second to-be-synchronized host 130 may be adjusted to a difference between the clock time of the second to-be-synchronized host 130 and the actual clock offset of the second to-be-synchronized host 130 relative to the first to-be-synchronized host 120, that is, the clock time of the second to-be-synchronized host 130 may be adjusted to 12:00 + 14 - 14 = 12:00 microseconds. Similarly, the clock time of the third to-be-synchronized host 140 may be adjusted to 12:00 - 4 - (-4) = 12:00 microseconds.

The computing device may determine the weight of the $n^{th}$ link based on the delay information of the $n^{th}$ link in the N links. The computing device may further determine an actual clock offset of each link based on the weight of each of the N links and the measurement clock offset, so as to synchronize the clock time of the at least two to-be-synchronized hosts based on the actual clock offset of each link. Because an error of the actual clock offset of each link determined by the computing device is small, precision of clock synchronization of a plurality of to-be-synchronized hosts can be improved, and an error of clock synchronization can be reduced.

Optionally, there are a plurality of specific implementations of synchronizing the clock time of the at least two to-be-synchronized hosts based on weights of the N links between the at least two to-be-synchronized hosts and the measurement clock offset. The steps in FIG. 3 are merely an example method. The computing device may further determine the actual clock offsets of the N links in another manner based on the weights of the N links and the measurement clock offsets, so as to synchronize the clock time of the at least two to-be-synchronized hosts. Alternatively, the computing device may directly synchronize the clock time of the at least two to-be-synchronized hosts based on the weights of the N links and the measurement clock offset in another manner. This is not limited in this embodiment of this application.

According to the method shown in this embodiment of this application, a simulation experiment is performed by using different quantities of hosts as an example. It may be obtained that when a quantity of hosts is 50, and average values of differences between one-way delays of round trips of all links between all the hosts are the same, when errors are allocated to all the links by using a same weight for clock synchronization, an average error of all the links is y1. When clock synchronization is performed according to the method shown in this embodiment of this application, an average error of all links is y2, and a ratio of y2 to y1 is approximately 0.85. In other words, a clock synchronization error can be reduced by about 15% according to the method in this embodiment of this application. When the quantity of hosts is 100 and the average values of the differences between one-way delays of the round trips of all the links between all the hosts are the same, when the errors are allocated to all the links by using a same weight for clock synchronization, the average error of all the links is y3. When clock synchronization is performed according to the method shown in this embodiment of this application, an average error of all links is y4, and a ratio of y4 to y3 is approximately 0.75. In other words, a clock synchronization error can be reduced by about 25% according to the method in this embodiment of this application. When the quantity of hosts is 150 and the average values of the differences between one-way delays of round trips of all the links between all the hosts are the same, an error of clock synchronization performed by allocating the errors to all the links between all the to-be-synchronized hosts by using a same weight is y5. An error of clock synchronization performed according to the method in this embodiment of this application is y6, and a ratio of y6 to y5 is approximately 0.7. In other words, according to the method in this embodiment of this application, a clock synchronization error can be reduced by approximately 30%. In other words, according to the method shown in this embodiment of this application, precision of clock synchronization of a plurality of to-be-synchronized hosts can be effectively improved, and a clock synchronization error can be reduced.

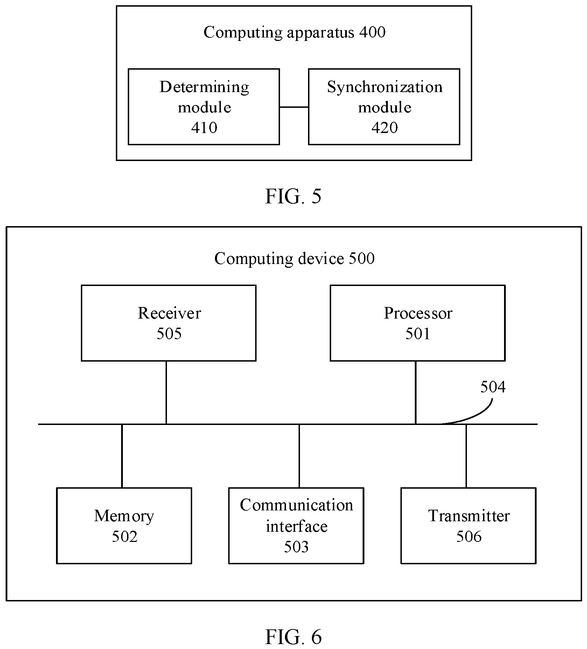

The foregoing describes the clock synchronization method according to embodiments of this application. The following describes a computing apparatus and a computing device according to embodiments of this application with reference to FIG. 5 and FIG. 6.

FIG. 5 is a schematic diagram of a structure of a computing apparatus according to an embodiment of this application. A computing apparatus 400 includes a determining module 410 and a synchronization module 420.

The determining module 410 is configured to determine delay information and a measurement clock offset of an $n^{th}$ link in N links between at least two to-be-synchronized hosts, and is further configured to determine a weight of the $n^{th}$ link based on the delay information of the $n^{th}$ link. Herein, n = 1, ..., N, and N is a positive integer greater than or equal to 1. The determining module 410 may perform steps S210 and S220 in the method in FIG. 2.

The synchronization module 420 is configured to synchronize clock time of the at least two to-be-synchronized hosts based on weights and measurement clock offsets of the N links that are determined by the determining module 410. The synchronization module 420 may perform step S230 in the method in FIG. 2 or steps S310 to S330 in the method in FIG. 3.

FIG. 6 is a structural block diagram of a computing device according to an embodiment of this application. A computing device 500 shown in FIG. 6 includes a processor 501, a memory 502, and a communication interface 503. The processor 501, the memory 502, and the communication interface 503 communicate with each other through a bus 504. A receiver 505 is configured to receive a to-be-processed request from a host, and a transmitter 506 is configured to send the to-be-processed request stored in the memory 502 to another computing device in a computing cluster.

The methods disclosed in embodiments of the present invention may be applied to the processor 501, or may be implemented by the processor 501. The processor 501 may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logic device, a discrete gate or a transistor logic device, a discrete hardware component, or the like. The general-purpose processor may be a microprocessor or any conventional processor or the like. In an implementation process, the steps in the foregoing methods may be completed by using a hardware integrated logic circuit in the processor 501, or by using instructions in a form of software. It may implement or perform the methods, the steps, and logical block diagrams that are disclosed in embodiments of the present invention. The general-purpose processor may be a microprocessor, or the processor may be any conventional processor or the like. Steps of the methods disclosed with reference to embodiments of the present invention may be directly executed and accomplished using a hardware decoding processor, or may be executed and accomplished by using a combination of hardware and software modules in the decoding processor. The software module may be located in the memory 502. The memory 502 may be a volatile memory or a nonvolatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). The processor 501 reads the instructions in the memory 502, and completes the steps of the foregoing methods in combination with hardware of the processor 501.

The memory 502 may store instructions used to perform the method performed by the computing device in the foregoing embodiment. The processor 501 may execute the instructions stored in the memory 502 and complete the steps of the computing device in the foregoing embodiments in combination with other hardware (for example, the receiver 505 and the transmitter 506). For a specific working process and beneficial effects, refer to the descriptions in the foregoing embodiments.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

In addition to a data bus, the bus 504 may further include a power bus, a control bus, a status signal bus, and the like. However, for clear description, various types of buses in the figure are marked as the bus 504.

According to the method provided in embodiments of this application, an embodiment of this application further provides a computer storage medium. The computer storage medium stores a program instruction, and when the program is executed, the steps in FIG. 2 or FIG. 3 may be included.

According to the methods provided in embodiments of this application, an embodiment of this application further provides a chip system. The chip system includes a logic circuit. The logic circuit is configured to be coupled to an input/output interface, and transmit data through the input/output interface, to perform the steps performed by the computing device in the foregoing embodiments.

According to the methods provided in embodiments of this application, this application further provides a computer program product. The computer program product includes computer program code, and when the computer program code is run on a computer, the computer is enabled to perform the steps in the foregoing embodiments.

According to the methods provided in embodiments of this application, this application further provides a computer-readable medium. The computer-readable medium stores program code, and when the program code is run on a computer, the computer is enabled to perform the steps in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A clock synchronization method, comprising:

   determining delay information and a measurement clock offset of an $n^{th}$ link in N links between at least two to-be-synchronized hosts, wherein the delay information comprises round-trip time or a difference between one-way delays of round trips, the measurement clock offset of the $n^{th}$ link is measurement clock offsets of two to-be-synchronized hosts connected to the $n^{th}$ link, n = 1, ..., N, and N is a positive integer greater than or equal to 1;
   determining a weight of the $n^{th}$ link based on the delay information of the $n^{th}$ link; and
   synchronizing clock time of the at least two to-be-synchronized hosts based on weights and measurement clock offsets of the N links.

2. The method according to claim 1, wherein the weight of the $n^{th}$ link is inversely proportional to the delay information of the $n^{th}$ link.

3. The method according to claim 1 or 2, wherein the synchronizing clock time of the at least two to-be-synchronized hosts based on weights and measurement clock offsets of the N links comprises:

   determining loop errors of M linear independent loops, wherein a loop error of an $m^{th}$ linear independent loop in the M linear independent loops is a sum of measurement clock offsets of all links comprised in the $m^{th}$ linear independent loop, m = 1, ..., M, and M < N;
   determining a correction of each of the N links based on the loop errors of the M linear independent loops and the weights of the N links, wherein the correction of each of the N links meets a constraint condition; and

   synchronizing the clock time of the at least two to-be-synchronized hosts based on the correction and a measurement clock offset of each of the N links.

4. The method according to claim 3, wherein the constraint condition comprises:

   a sum of corrections of all the links comprised in the $m^{th}$ linear independent loop is the same as the loop error of the $m^{th}$ linear independent loop; and
   the correction of each of the N links is a correction that makes a value of $W^T\Delta^2$ be a minimum value, wherein $W^T=\{w_1, ..., W_N\}$, $w_N$ is a weight of an $N^{th}$ link, $\Delta=\{\Delta_1, ..., \Delta_N\}^T$, and $\Delta_N$ is a correction of the $N^{th}$ link.

5. The method according to claim 4, wherein the constraint condition further comprises: an absolute value of the correction of the $n^{th}$ link is less than the round-trip time of the $n^{th}$ link.

6. The method according to any one of claims 3 to 5, wherein the synchronizing the clock time of the at least two to-be-synchronized hosts based on the correction and a measurement clock offset of each of the N links comprises:

   determining one of the at least two to-be-synchronized hosts as a reference host;
   determining an actual clock offset of a $k^{th}$ shortest path, wherein the $k^{th}$ shortest path is a shortest path between a $k^{th}$ to-be-synchronized host in K to-be-synchronized hosts and the reference host, the K to-be-synchronized hosts are hosts other than the reference host in the at least two to-be-synchronized hosts, and k = 1, ..., K; and
   adjusting clock time of the $k^{th}$ to-be-synchronized host to a difference between the clock time of the $k^{th}$ to-be-synchronized host and the actual clock offset of the $k^{th}$ shortest path, wherein the actual clock offset of the $k^{th}$ shortest path is a sum of actual clock offsets of all links comprised in the shortest path between the $k^{th}$ to-be-synchronized host and the reference host, and an actual clock offset of each link comprised in the $k^{th}$ shortest path is a difference between a measurement clock offset and a correction of each link.

7. A computing apparatus, comprising:

   a determining module, configured to determine delay information and a measurement clock offset of an $n^{th}$ link in N links between at least two to-be-synchronized hosts, wherein the delay information comprises round-trip time or a difference between one-way delays of round trips, the measurement clock offset of the $n^{th}$ link is measurement clock offsets of two to-be-synchronized hosts connected to the $n^{th}$ link, n = 1, ..., N, and N is a positive integer greater than or equal to 1, wherein

the determining module is further configured to determine a weight of the $n^{th}$ link based on the delay information of the $n^{th}$ link; and

a synchronization module, configured to synchronize clock time of the at least two to-be-synchronized hosts based on weights and measurement clock offsets that are of the N links and that are determined by the determining module.

8. The apparatus according to claim 7, wherein the weight of the $n^{th}$ link is inversely proportional to the delay information of the $n^{th}$ link.

9. The apparatus according to claim 7 or 8, wherein the synchronization module is specifically configured to determine loop errors of M linear independent loops, wherein a loop error of an $m^{th}$ linear independent loop in the M linear independent loops is a sum of measurement clock offsets of all links comprised in the $m^{th}$ linear independent loop, m = 1, ..., M, and M < N;

the synchronization module is further configured to determine a correction of each of the N links based on the loop errors of the M linear independent loops and the weights of the N links, wherein the correction of each of the N links meets a constraint condition; and
the synchronization module is further configured to synchronize the clock time of the at least two to-be-synchronized hosts based on the correction and a measurement clock offset of each of the N links.

10. The apparatus according to claim 9, wherein the constraint condition comprises:

a sum of corrections of all the links comprised in the $m^{th}$ linear independent loop is the same as the loop error of the $m^{th}$ linear independent loop; and
the correction of each of the N links is a correction that makes a value of $W^T \Delta^2$ be a minimum value, wherein $W^T = \{w_1, ..., w_N\}$, $w_N$ is a weight of an $N^{th}$ link, $\Delta = \{\Delta_1, ..., \Delta_N\}^T$, and $\Delta_N$ is a correction of the $N^{th}$ link.

11. The apparatus according to claim 10, wherein the constraint condition further comprises: an absolute value of the correction of the $n^{th}$ link is less than the round-trip time of the $n^{th}$ link.

12. The apparatus according to any one of claims 9 to 11, wherein the synchronization module is specifically configured to determine one of the at least two to-be-synchronized hosts as a reference host;

the synchronization module is further configured to determine an actual clock offset of a $k^{th}$ shortest path, wherein the $k^{th}$ shortest path is a shortest path between a $k^{th}$ to-be-synchronized host in K to-be-synchronized hosts and the reference host, the K to-be-synchronized hosts are hosts other than the reference host in the at least two to-be-synchronized hosts, and k = 1, ..., K; and
the synchronization module is further configured to adjust clock time of the $k^{th}$ to-be-synchronized host to a difference between the clock time of the $k^{th}$ to-be-synchronized host and the actual clock offset of the $k^{th}$ shortest path, wherein the actual clock offset of the $k^{th}$ shortest path is a sum of actual clock offsets of all links comprised in the shortest path between the $k^{th}$ to-be-synchronized host and the reference host, and an actual clock offset of each link comprised in the $k^{th}$ shortest path is a difference between a measurement clock offset and a correction of each link.

13. A computing device, comprising a processor, wherein the processor is configured to be coupled to a memory, and read and execute instructions and/or program code in the memory, to perform the method according to any one of claims 1 to 6.

14. A chip system, comprising a logic circuit, wherein the logic circuit is configured to be coupled to an input/output interface, and transmit data through the input/output interface, to perform the method according to any one of claims 1 to 6.

15. A computer-readable medium, wherein the computer-readable medium stores program code, and when the computer program code is run on a computer, the computer is enabled to perform the method according to any one of claims 1 to 6.

**Computing device 110**

**First to-be-synchronized host 120**

Link 1          Link 2

Link 3

Second to-be-synchronized host 130          Third to-be-synchronized host 140

FIG. 1

S210

Determine delay information and a measurement clock offset of an $n^{th}$ link in N links between at least two to-be-synchronized hosts

S220

Determine a weight of the $n^{th}$ link based on the delay information of the $n^{th}$ link

S230

Synchronize clock time of the at least two to-be-synchronized hosts based on weights and measurement clock offsets of the N links

FIG. 2

| | S310 |
|---|---|
| Determine loop errors of M linear independent loops | |

| | S320 |
|---|---|
| Determine a correction of each of N links based on the loop errors of the M linear independent loops and weights of the N links | |

| | S330 |
|---|---|
| Synchronize clock time of at least two to-be-synchronized hosts based on the correction and a measurement clock offset of each of the N links | |

FIG. 3

Computing device 110

First to-be-synchronized host 120

Link 1
20

Link 2
5

−15
Link 3

Second to-be-synchronized host 130

Third to-be-synchronized host 140

FIG. 4

Computing apparatus 400

| Determining module 410 | Synchronization module 420 |

FIG. 5

Computing device 500

| Receiver 505 | Processor 501 |

504

| Memory 502 | Communication interface 503 | Transmitter 506 |

FIG. 6

# EP 4 492 711 A1

## INTERNATIONAL SEARCH REPORT

International application No.

**PCT/CN2023/082658**

### A. CLASSIFICATION OF SUBJECT MATTER

H04J3/06(2006.01)i

According to International Patent Classification (IPC) or to both national classification and IPC

### B. FIELDS SEARCHED

Minimum documentation searched (classification system followed by classification symbols)

IPC:H04J

Documentation searched other than minimum documentation to the extent that such documents are included in the fields searched

Electronic data base consulted during the international search (name of data base and, where practicable, search terms used)

CNABS, CNTXT, DWPI, WOTXT, EPTXT, USTXT, VEN, CJFD, CNKI, IEEE: 华为, 不对称, 时延, 偏移, 链路, 环, 权重, 时间, 时钟, 同步, HUAWEI, asymmetry, delay, offset, link, ring, weight, time, clock, synchronization

### C. DOCUMENTS CONSIDERED TO BE RELEVANT

| Category* | Citation of document, with indication, where appropriate, of the relevant passages | Relevant to claim No. |
|---|---|---|
| X | US 2013259049 A1 (MARVELL ISRAEL (M.I.S.L) LTD.) 03 October 2013 (2013-10-03) description, paragraphs [28]-[140], and figures 1A-9 | 1-2, 7-8, 13-15 |
| X | CN 104247309 A (MARVELL ISRAEL (M.I.S.L) LTD.) 24 December 2014 (2014-12-24) description, paragraphs [81]-[163], and figures 1-7 | 1-2, 7-8, 13-15 |
| A | CN 112235861 A (XIDIAN UNIVERSITY et al.) 15 January 2021 (2021-01-15) entire document | 1-15 |
| A | CN 112511253 A (ZTE CORP.) 16 March 2021 (2021-03-16) entire document | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 June 2023** | **28 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082658**

| Patent document cited in search report | | | Publication date (day/month/year) | Patent family member(s) | | | Publication date (day/month/year) |
|---|---|---|---|---|---|---|---|
| US | 2013259049 | A1 | 03 October 2013 | US | 9806835 | B2 | 31 October 2017 |
| | | | | US | 2018048409 | A1 | 15 February 2018 |
| | | | | US | 10205547 | B2 | 12 February 2019 |
| CN | 104247309 | A | 24 December 2014 | EP | 2813016 | A2 | 17 December 2014 |
| | | | | EP | 2813016 | B1 | 11 September 2019 |
| | | | | US | 2013208735 | A1 | 15 August 2013 |
| | | | | US | 9172485 | B2 | 27 October 2015 |
| | | | | WO | 2013117997 | A2 | 15 August 2013 |
| | | | | WO | 2013117997 | A3 | 03 January 2014 |
| | | | | US | 2014161143 | A1 | 12 June 2014 |
| | | | | US | 9209920 | B2 | 08 December 2015 |
| | | | | WO | 2013117997 | A1 | 14 November 2013 |
| | | | | CN | 104247309 | B | 14 November 2013 |
| | | | | CN | 104584467 | A | 14 November 2013 |
| CN | 112235861 | A | 15 January 2021 | CN | 112235861 | B | 30 November 2021 |
| CN | 112511253 | A | 16 March 2021 | WO | 2021190051 | A1 | 30 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210377287